# EUROPEAN PATENT SPECIFICATION

(11) **EP 1 831 067 B1**
(45) Date of publication and mention of the grant of the patent: **08.04.2009**
(21) Application number: 04806544.5
(22) Date of filing: 21.12.2004
(51) Int. Cl.: B62D 21/02, B62D 21/03, B60P 3/08

(54) **CHASSIS FOR A MOTORIZED VEHICLE**
CHASSIS FÜR MOTORISIERTES FAHRZEUG
CHÂSSIS POUR UN VÉHICULE MOTORISÉ

(43) Date of publication of application: 12.09.2007
(73) Proprietor: RENAULT TRUCKS, 69800 St Priest (FR)
(72) Inventor: BERTOIA, Patric, F-38200 Serpaize (FR)
(74) Representative: Putet, Gilles
(86) International application number: PCT/IB2004/004385
(87) International publication number: WO 2006/067552

(56) References cited:
- FR-A- 2 844 766
- US-A- 4 386 792
- US-A1- 2004 062 620
- US-A1- 2004 069 556
- US-A1- 2004 104 568
- US-B1- 6 820 900

## Description

### Technical field of the invention

The present invention concerns a chassis of a vehicle and, more particularly of an industrial vehicle of the heavy goods lorry type, that is to say a motorized vehicle intended to pull or to carry a load.

### Technological background

(As a preliminary, it is stated that reference will hereafter be made to the reference system XYZ relating to the centre of gravity of the vehicle in which X is the longitudinal axis, Y is the transverse axis and Z is the vertical axis).

The chassis of a vehicle is a metal structure supporting mechanical components (engine, gearbox, steering, axle system, tank, etc), a cab and where necessary a body.

In the case of an industrial vehicle of the heavy goods lorry type, the chassis usually consists of two frame rails connected together by crossmembers. In conventional manner, each frame rail consists of a C-shaped metal sheet section formed by a web from which extend two flanges. These C-sections have a considerable modulus of inertia.

Although this principle of producing a lorry chassis is satisfactory from the simplicity point of view, it is unsatisfactory from other points of view.

In the field of lorries, trends are being observed aiming towards, amongst other things:
- increasing power through bigger engines,
- incorporating safety devices in case of accidents, of the anti-underrun device type.

For the chassis, as regards essentially its front portion, this involves the obligation to conform to these new requirements.

It should be stated that the current technology using a chassis formed by two frame rails held together transversely makes it difficult to satisfy these requirements.

The very principle of the chassis with frame rails is based on the fact that each frame rail behaves like a beam and, thanks to its inertia, gives the chassis the required rigidity. The behaviour of the frame rails is therefore optimal when they are rectilinear and retain their structural integrity.

To satisfy the aforementioned requirements, it may be necessary to bend the frame rails to distance them from one another or to make cut-outs in the frame rails. These impairments of the frame rails are totally prejudicial to their behaviour and, in the end, degrade the mechanical stiffness characteristic of the whole chassis.

Because of the structural inadaptability of the current chassis that prevents their architecture being modified, there is therefore a place for the improvement of the chassis of industrial vehicles of the heavy goods lorry type.

In US-2004/0062620, is described a chassis having two portions. One first portion comprises two longitudinal rails carrying all the vehicle's axles. The second portion is a framework which has the prime purpose of supporting a body. The framework does not carry any axle.

In US-6.820.900, the industrial vehicle chassis has two portions. The front portion is a central tubular element made of corrugated sheet metal installed around regularly spaced square frames. The rear portion of the chassis is a quadrilateral frame which extends in the extension of the front portion.

### Summary of the invention

An object of the invention is to propose a motorized industrial vehicle chassis offering increased space for the accommodation of mechanical members.

A further object of the invention is to propose a motorized vehicle chassis incorporating functions of interfacing with mechanical members and offering a better recognition of the functions of modularization.

A further object of the invention is to propose a motorized vehicle chassis having an improved static and dynamic multi-axis rigidity.

The invention therefore concerns a chassis for a motorized industrial vehicle formed by a front portion operatively connected to a rear portion. The front portion is capable in particular of receiving at least one of the elements of the group comprising a motive power unit, a steering system, a cooling system, a cab and an axle system, and a rear portion having at least one axle system capable of receiving a load or coupling means. The rear portion comprises two parallel frame rails. The front portion comprises two frameworks situated respectively in the extension of one of the frame rails, each framework being capable of having at least one shaped portion. The front part being made of frameworks can be formed or shaped according to requirements of the architecture of the front part. The chassis according to the invention can therefore accommodate large components specifically it can accommodate large engine and large cooling components. In other terms the front part of the chassis can be geometrically adjusted by plastic forming to amongst other things the size of the functional components usually found in an industrial vehicle without any lose of the mechanical properties of the chassis.

In one preferred embodiment, each framework is formed by at least two beams joined together by a plurality of struts, the two frameworks being joined together by at least one transverse beam.

In one advantageous possible embodiment of the invention, at least one of the frameworks can be formed in at least one zone to give the chassis a changing width, which, without impairing the mechanical properties of the chassis, allows the chassis to be adapted to local vehicle architectural requirements.

Note that, according to one embodiment of this chassis, it is envisaged that each of the frameworks can have a portion formed along a double curve to increase the width of the chassis, this disposition making it possible to accommodate vehicular mechanical elements such as engine or cooling component having a considerable transverse dimension.

According to certain architectural requirements, it may be envisaged that at least one of the beams of one framework can have a transverse deflection. It may be the top beam or the bottom beam of a framework.

More specifically, the deflection may be directed towards the interior of the chassis, which makes it possible in particular to make a reserved area in order to avoid a conflict between a wheel and .the chassis when the wheel is turned.

In one embodiment of the chassis, the frameworks can be connected by several transverse beams and it is then envisaged that at least two adjacent transverse beams can be connected together by at least one substantially longitudinal beam.

As regards the junction between the front portion and the rear portion of the chassis, one possibility is that each frame rail can be provided with a plurality of holes and each framework can be provided with a plurality of corresponding holes, the attachment of a framework to a frame rail being achieved by inserting a pin into each of the respective holes of a frame rail and of the framework.

Advantageously, and to ensure a continuity between the front portion and the rear portion of the chassis, the height of a framework is substantially equal to the height of the frame rail to which it is attached.

One particularly advantageous embodiment of the chassis provides that each framework can comprise two metal sections of substantially square cross-section joined together by struts. A square section has the advantage of exhibiting a symmetry along the transverse Y axis and the vertical Z axis while producing flat surfaces allowing the accommodation and the securing of mechanical elements.

According to one possibility, at least one of the square sections has on at least one of its faces a track, but preferably each of the faces of the square sections exhibits on its four faces a track capable of receiving a nut, a bolt head or a rivet. These dispositions have, as an advantage, the fact of placing attachment means on the frameworks by which a vehicular functional component may be secured to the chassis.

To allow the insertion of nuts or of bolt heads in a track, an enlargement can be provided at certain points.

In one embodiment, the two frameworks can be connected by two transverse beams receiving engine suspension attachments.

An important point is that the invention can be used to dispense with the interface between the chassis and the vehicular functional component of the vehicle, thus, for example:
- the cooling system can be attached directly to the end of the two frameworks,
- at least one of the frameworks can directly receive a towing system,
- at least one of the frameworks directly can support the steering system.

The invention also provides that at least one of the frameworks of the front portion can be lengthened by an extension, an extension of the front portion of the chassis being capable of serving as an interface with vehicular functional component.

According to one possible embodiment, the extension can be attached to the bottom beam of a framework and is formed of two outwardly formed beams connected by uprights.

In substance, the invention resides in the combination of a rear portion consisting of frame rails and therefore well suited to supporting carried or pulled loads and a front portion as a framework which may be formed or shaped particularly by plastic deflection without the mechanical properties, particularly in terms of absorption of force, being affected. This advantage is considerable relative to the conventional chassis consisting of frame rails whose geometry is substantially fixed.

The chassis according to the invention offers the possibility, without impairing the rigidity, of widening the chassis in its front portion in order, in particular, to receive cooling members dimensioned for high-powered engines.

Note also that the chassis according to the invention offers the possibility, without impairing the rigidity, of creating in the chassis reserved areas making it possible for example to avoid a conflict between a wheel and the chassis, when the wheel is turned.

The modularity is due to the fact that the chassis can be divided into a separate front portion and rear portion which may be connected depending on the purpose of a vehicle.

From the manufacturing point of view, it is possible to have a front portion of the chassis as a framework onto which several types of rear portions may be attached.

The chassis also has the facility of providing an adjustment of the ground clearance of the rear portion relative to the front portion by working on the height at which the frameworks are attached to the frame rails.

As a corollary, the chassis has a lower mass and greater rigidity than a conventional chassis.

With masses being equal, the gain in static twisting rigidity is 100%, while the gains in dynamic twisting and bending rigidity are respectively 20% and 100%. These are extremely substantial gains whose benefits in terms of comfort, behaviour and acoustics are considerable.

These and others advantages will become apparent upon reading the following description in view of the drawing attached hereto representing, as a non-limiting example, an embodiment of a chassis according to the invention.

### Brief description of the figures

The following detailed description of embodiments of the invention is better understood when read in conjunction with the appended drawings being understood, however, that the invention is not limited to the specific embodiments disclosed. In the drawings:
- Figure 1: is a view in perspective of a front portion of a chassis according to the invention,
- Figure 2: is a top view of this front portion,

- Figure 3: is a front view of the front portion,
- Figure 4: is a top view of the chassis, according to the invention, incorporating certain vehicular functional element of an industrial vehicle,
- Figure 5: is a front view of the chassis,
- Figure 6: is a side view of the chassis,
- Figure 7: is a cross-section of a beam forming the front portion.
- Figure 8: is a view of the junction between the front portion and the rear portion of the chassis,

### Detailed description of the invention

As the figures show, the chassis 1 according to the invention consists of the combination of a front portion 2 and a rear portion 3.

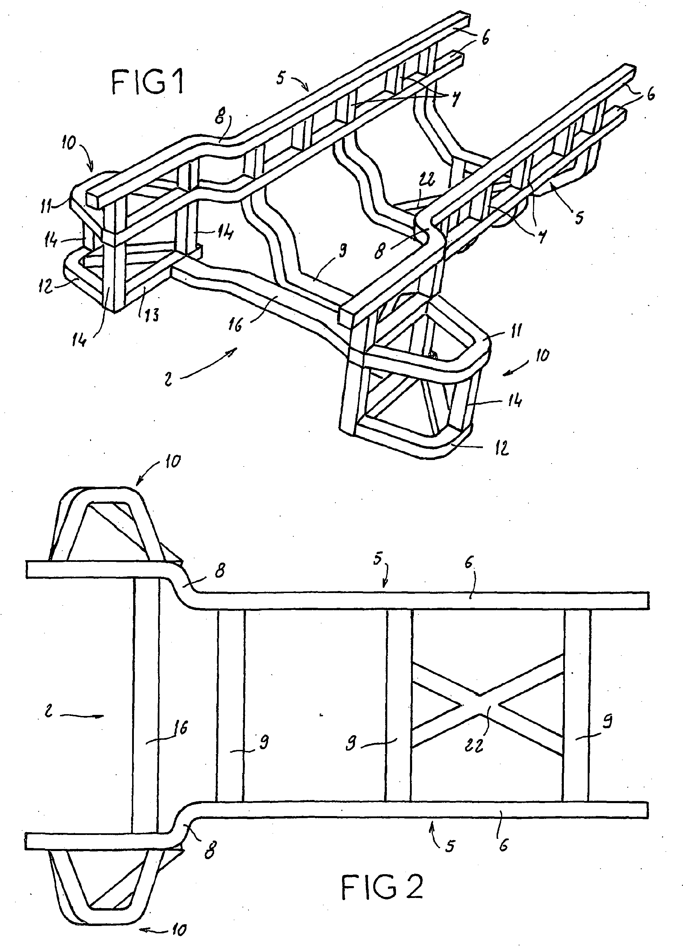

Initially, a description will be given of the front portion 2 of the chassis by referring more particularly to Figures 1 to 3 which show this portion from different angles.

Referring first of all to Figure 1, it can be seen that the front portion 2 of the chassis comprises two frameworks 5. Each of these frameworks 5 is formed of two superimposed beams 6 that are joined together by several struts 7. In the example shown, the struts 7 are distributed substantially equidistantly between the beams 6. The beams 6, like the struts 7, are suitably made in steel sections and are for example assembled by welding to form the frameworks 5.

Figure 2 shows a very specific point of the chassis according to the invention. As this figure shows, each of the frameworks 5 can be formed such that the width of the front portion 2 of the chassis changes. In the illustrated example, each of the frameworks 5 has a zone 8 of plastic deflection which can be obtained by two successive curves of opposite concavity. The deflected zones 8 of each of the frameworks 5 can be symmetrical relative to the longitudinal axis of the chassis such that, as is clearly shown in Figure 2, the front portion 2 of the chassis has two significantly distinct widths. It should be noted that only one of the frameworks 5 may be deflected and within one of the frameworks 5, only one of the beams 6 may be deflected according to a local architectural requirement. As concerns the geometry of the beams, they are envisaged to be given a square section.

In the transverse direction, the two frameworks 5 can be connected by three transverse beams 9. It is notable that the two beams 9 at the rear end are connected together by a cross-shaped longitudinal element 22. The transverse beams 9 are suitably attached to the frameworks 5 by welding.

In a manner very specific to the front portion 2 of the chassis according to the invention, note that the two frameworks 5 can be each provided with an extension 10.

In the example shown, each of the extensions 10 has the same structure. They can each comprise two beams formed outwardly, namely a top beam 11 and a bottom beam 12, connected to one another by three vertical uprights 14. The bottom beam 12 is closed off by a longitudinal bar 13. An important point to note is that each of the extensions 10 can be directly attached to the framework 5; in the example shown, the attachment is made on the bottom portion of each of the frameworks 5. The extensions 10 can be made in the same materials as the frameworks 5; the beams 11 and 12 can consist of the same sections as the beams 6 of the frameworks 5 and the uprights 14 consist of the same sections as the struts 7. There is thereby a structural continuity between the frameworks 5 and the extensions 10.

An other point concerning the extensions 10 is that the latter can be connected by a transverse bar 16 which can form the fourth means of cross-connection of the front portion 2 of the chassis.

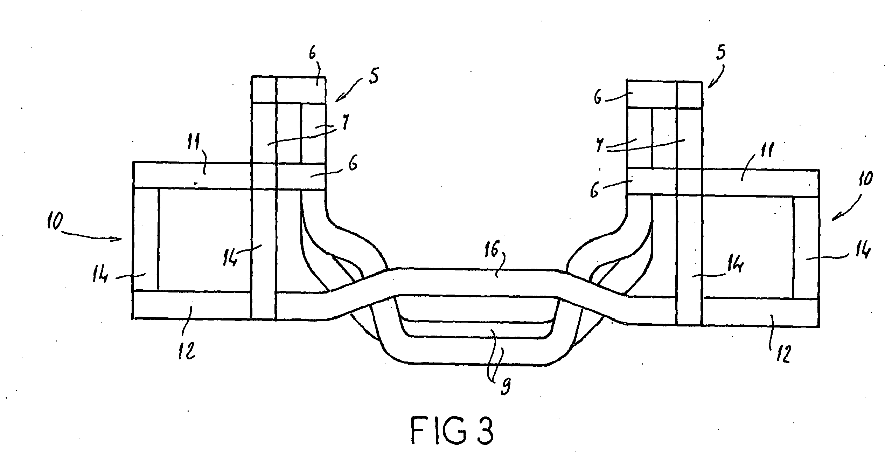

Figure 3 illustrates clearly the fact that the transverse beams 9 and 22 are bent downwardly in this example to accommodate a large high power engine.

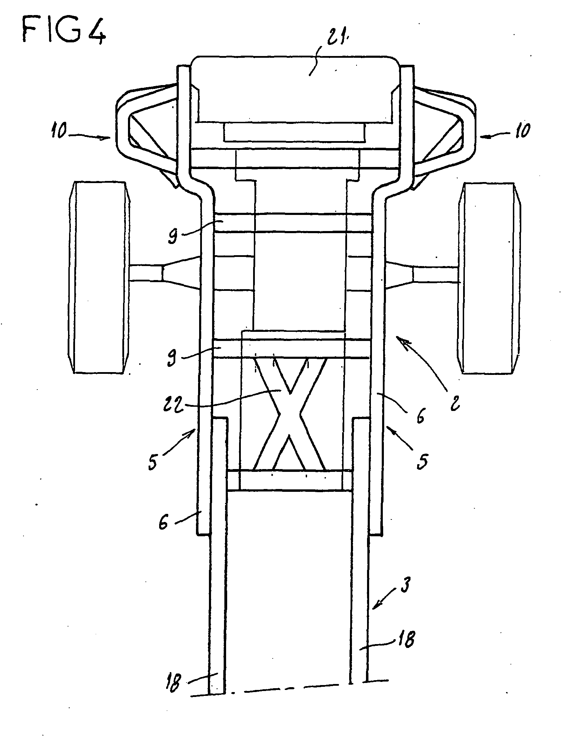

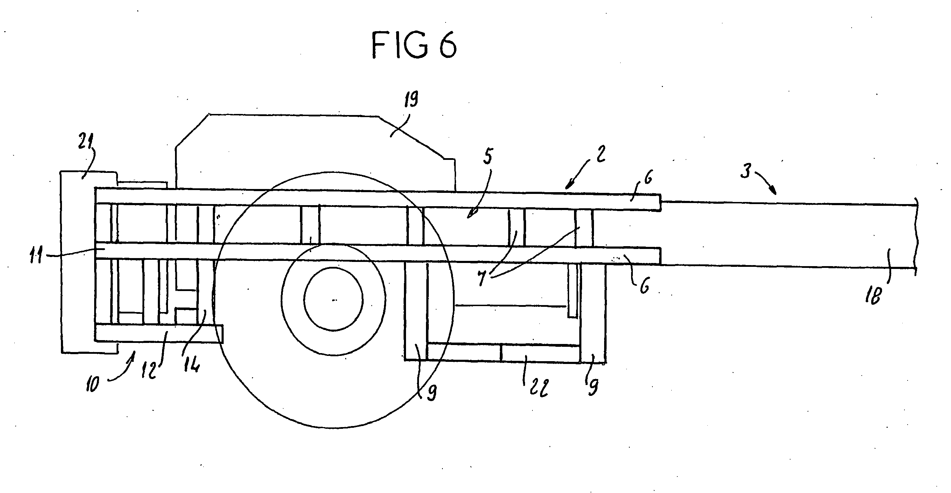

Reference is now made more particularly to Figures 4 to 6 showing the chassis in its front portion 2 and back portion 3. Note that the back end 3 is not fully illustrated on the drawings; this part can be of various lengths depending on the vehicle being a lorry or a tractor.

The front portion 2 of the chassis is intended to accommodate the motive power unit with all its components (for example cooling system, steering means, etc) and is attached to two frame rails 18 which constitute the rear portion 3 of the chassis.

In the illustrated example the frame rails 18 are suitably in the shape of C-sections each consisting of a web 30 and of two perpendicular flanges 31, the perpendicular flanges 31 being directed towards the interior of the chassis in the illustrated example. The figures do not show the rear axle system or axle systems, but it is clear that it may be any carrying or pulling vehicle. The frame rails 18 can be of various cross sectional contours such as for examples I-sections, U-sections, T-sections or Z-sections.

The junction of the front portion 2 and of the rear portion 3 of the chassis must be produced with much care in order to allow a transmission of the forces between these two portions.

With reference to Figure 4, it can be seen that the frame rails 18 can be engaged in the frameworks 5 such that the outer face of the web of each frame rail 18 is bearing against the inner face of each of the beams.

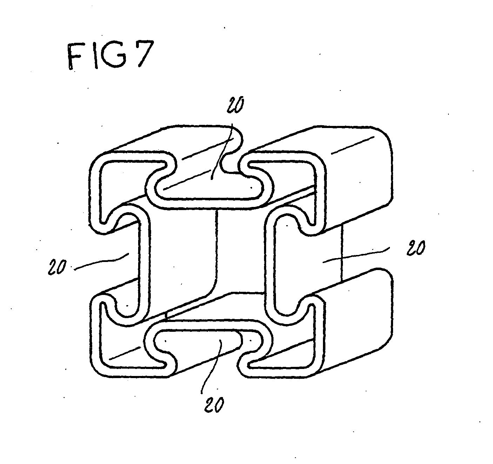

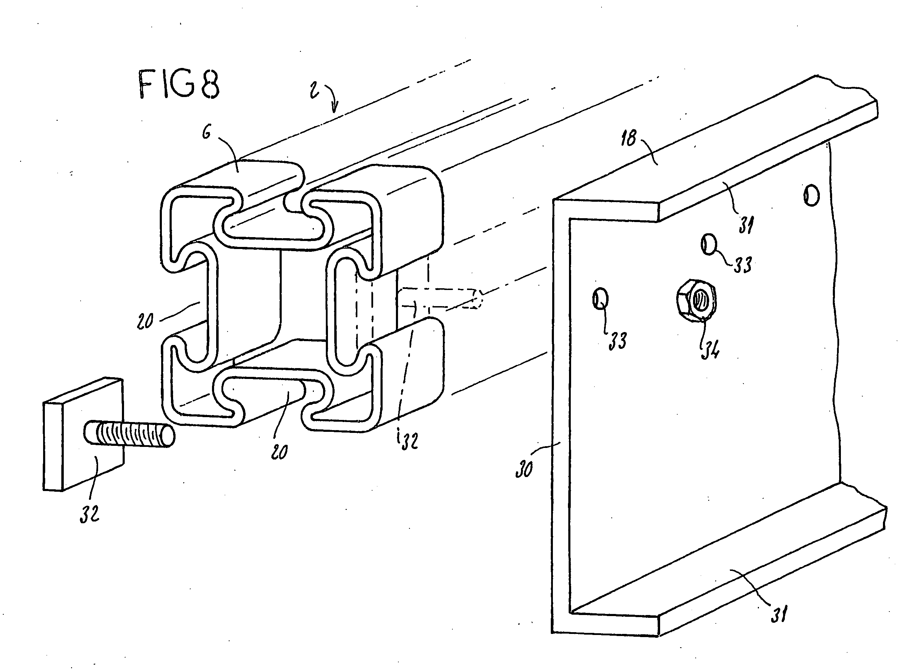

In the example shown, as seen in Figure 7, the beams 5 can have tracks 20 substantially in the shape of dovetail. Figure 8 shows that bolts 32 can be engaged in the tracks 20 provided in the beam 5 while holes 33 are made in the web 30 of the frame rails 18. These holes 33 allow bolts 32 to be passed through which are screwed into the nuts 34 placed in the beams. In the present case shown in Figure 8, it is envisaged that eight bolts are provided for each beam; that is a total of thirty-two bolts for the assembly of the front portion and of the rear portion of the chassis. Naturally, this number may vary according to the dimension and the mass of the chassis.

Figure 4, which shows the chassis in a top view incorporating the motive power unit 19 with its front axle system, schematized by a block, represents the engine supported by two beams 9. These two beams 9 receive, for this purpose, supports for attaching the engine.

A gearbox is also schematized and is supported by the two transverse beams 9 connected by the cross-shaped longitudinal element 8.

At the free end of its front portion 2, the chassis can incorporate a cooling component 21 of the engine. The cooling component 21, which is of large size, is found in the widest portion of the chassis.

Figure 4 clearly illustrates a very significant advantage of the invention. If, beginning with Figure 4, the frame rails 18 were extended towards the front of the vehicle in the manner of a conventional chassis, it can be seen that the frame rails would be incapable of accommodating the large sized cooling component 21 such as these shown.

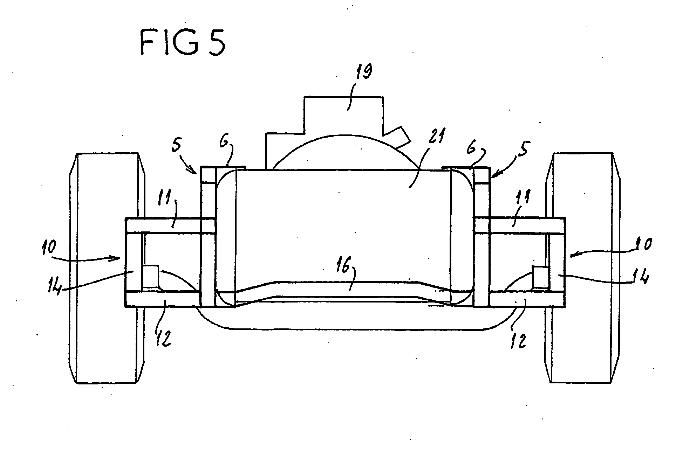

As is clearly shown in Figure 5, the cooling component 21 is directly accessible, which in the context of an after-sales service operation is extremely positive.

As for the extensions 10, they can have several functions, such as support for the cab supporting shock absorber and step for getting into the cab. The latter point is of value because the extensions may descend close to the ground and therefore, in the end, make access to the cab easier.

Thus the invention provides a chassis having the aforementioned numerous advantages, particularly possible formation of the front portion, increased rigidity and modularity.

## Claims

1. Chassis for an industrial motorized vehicle of the heavy goods lorry type formed by a front portion (2) and a rear portion (3)
- the front portion (2) capable in particular of receiving at least a motive power unit (19, 20), and an axle system, and
- the rear portion (3) having at least one axle system capable of receiving a load or coupling means, **characterized in that** said chassis is divided into separate front (2) and rear portions (3) attached one onto the other, wherein the rear portion (3) comprises two parallel frame rails (18), and the front portion (2) comprises two frameworks (5) situated respectively in the extension of one of the frame rails (18), each framework (5) being capable of having at least one formed portion, each framework (5) being formed by at least two beams (6) joined together by a plurality of struts (7).

2. Chassis for motorized vehicle according to Claim 1, **characterized in that** the two frameworks (5) are joined together by at least one transverse beam (9).

3. Chassis for motorized vehicle according to Claim 1 or Claim 2, **characterized in that** at least one of the frameworks (5) is formed in at least one zone to give the chassis a changing width.

4. Chassis for motorized vehicle according to Claim 3, **characterized in that** each of the frameworks (5) has a zone (8) formed along a double curve to increase the width of the chassis.

5. Chassis for motorized vehicle according to one of the Claims 2 to 4, **characterized in that** at least one of the beams (6) of one framework has a transverse deflection.

6. chassis for motorized vehicle according to Claim 5, **characterized in that** the formed portion of a framework (5) is directed towards the interior of the chassis.

7. Chassis for motorized vehicle according to one of Clams 1 to 6, **characterized in that** the frameworks (5) are connected by several transverse beams (9, 16).

8. Chassis for motorized vehicle according to one of claims 1 to 7, **characterized in that** at least two adjacent transverse beams (9) are connected together by at least one cross-shaped longitudinal beam (8).

9. Chassis for motorized vehicle according to one of Claims 1 to 8, **characterized in that** each frame rail (18) is provided with a plurality of holes and each framework (5) is provided with a plurality of corresponding holes, the attachment of a framework (5) onto a frame rail (18) being achieved by inserting a pin into each of the respective holes of a frame rail (18) and of the framework (5).

10. Chassis for motorized vehicle according to one of Claims 1 to 9, **characterized in that** the height of a framework (5) is substantially equal to the height of the frame rail (18) to which it is attached.

11. Chassis for motorized vehicle according to one of Claims 1 to 10, **characterized in that** each framework (5) consists of two beams (6) of substantially square cross-section joined together by struts (7).

12. Chassis for motorized vehicle according Lo Claim 11, **characterized in that** at least one of the square beams has a track (20) on at least one of its faces.

13. Chassis for motorized vehicle according to Claim 12, **characterized in that** each of the faces of the square beams has, on its four faces, a track (20) capable of receiving a nut, a bolt head or a rivet.

14. Chassis for motorized vehicle according to Claim 12 or Claim 13, **characterized in that** at least one of the track (20) has at least one enlargement.

15. Chassis for motorized vehicle according to one of Claims 1 to 14, **characterized in that** the two frameworks (5) are connected by two transverse beams (9) receiving engine suspension attachments.

16. Chassis for motorized vehicle according to one of Claims 1 to 15, **characterised in that** the cooling system (21) is attached to the free end of the two frameworks (5).

17. Chassis for motorized vehicle according to one of Claims 1 to 16, **characterized in that** at least one of the frameworks (5) directly supports a towing system.

18. Chassis for motorized vehicle according to one of Claims 1 to 17, **characterized in that** at least one of the frameworks (5) directly supports the steering system.

19. Chassis according to one of Claims 1 to 18, **characterized in that** at least one of the frameworks (5) of the front portion is lengthened by an extension (10).

20. Chassis according to Claim 19, **characterized in that** the extension (10) is attached to the buttom bream (6) of a framework (5) and is formed of two outwardly shaped beams (11, 12) connected by uprights (14).

## Patentansprüche

1. Chassis für ein motorisiertes Industriefahrzeug in Art eines Schwergutlastkraftwagens, das von einem vorderen Abschnitt (2) und einem hinteren Abschnitt (3) gebildet wird, wobei
- der vordere Abschnitt (2) insbesondere eine Antriebseinheit (19, 20) und ein Achssystem aufnehmen kann und
- der hintere Abschnitt (3) wenigstens ein Achssystem aufweist, das eine Last oder eine Kupplungseinrichtung aufnehmen kann,
**dadurch gekennzeichnet, dass** das Chassis in einen Vorderabschnitt (2) und einen Hinterabschnitt (3) unterteilt ist, die voneinander getrennt und aufeinander befestigt sind, wobei der hintere Abschnitt (3) zwei parallele Rahmenschienen (18) umfasst, und der vordere Abschnitt (2) zwei Rahmentragwerke (5) umfasst, die jeweils in der Verlängerung einer der Rahmenschienen (18) angeordnet sind, wobei jedes Rahmentragwerk (5) wenigstens einen Formabschnitt aufweisen kann, wobei jedes Rahmentragwerk (5) von wenigstens zwei Trägern (6) gebildet wird, die miteinander durch eine Vielzahl von Streben (7) verbunden sind.

2. Chassis für ein motorisiertes Fahrzeug nach Anspruch 1, **dadurch gekennzeichnet, dass** die zwei Rahmentragwerke (5) miteinander durch wenigstens einen Querträger (9) verbunden sind.

3. Chassis für ein motorisiertes Fahrzeug nach Anspruch 1 oder 2, **dadurch gekennzeichnet, dass** wenigstens eines der Rahmentragwerke (5) in wenigstens einem Bereich angeordnet ist, um dem Chassis eine sich verändernde Breite zu geben.

4. Chassis für ein motorisiertes Fahrzeug nach Anspruch 3, **dadurch gekennzeichnet, dass** jedes der Rahmentragwerke (5) einen Bereich (8) aufweist, der entlang einer Doppelkurve ausgebildet ist, um die Breite des Chassis zu erhöhen.

5. Chassis für ein motorisiertes Fahrzeug nach einem der Ansprüche 2 bis 4, **dadurch gekennzeichnet, dass** wenigstens einer der Träger (6) eines Rahmentragwerks eine Querbiegung aufweist.

6. Chassis für ein motorisiertes Fahrzeug nach Anspruch 5, **dadurch gekennzeichnet, dass** der Formabschnitt eines Rahmentragwerks (5) in Richtung des Inneren des Chassis gerichtet ist.

7. Chassis für ein motorisiertes Fahrzeug nach einem der Ansprüche 1 bis 6, **dadurch gekennzeichnet, dass** die Rahmentragwerke (5) durch verschiedene Querträger (9, 16) verbunden sind.

8. Chassis für ein motorisiertes Fahrzeug nach einem der Ansprüche 1 bis 7, **dadurch gekennzeichnet, dass** wenigstens zwei angrenzende Querträger (9) miteinander durch wenigstens einen kreuzförmigen Längsträger (8) verbunden sind.

9. Chassis für ein motorisiertes Fahrzeug nach einem der Ansprüche 1 bis 8, **dadurch gekennzeichnet, dass** jede Rahmenschiene (18) mit einer Vielzahl von Öffnungen versehen ist und jedes Rahmentragwerk (5) mit einer Vielzahl entsprechender Öffnungen versehen ist, wobei die Befestigung eines Rahmentragwerks (5) an einer Rahmenschiene (18) durch Einsetzen eines Stiftes in jede der jeweiligen Öffnungen einer Rahmenschiene (18) und des Rahmentragwerks (5) erreicht wird.

10. Chassis für ein motorisiertes Fahrzeug nach einem der Ansprüche 1 bis 9, **dadurch gekennzeichnet, dass** die Höhe eines Rahmentragwerks (5) im Wesentlichen gleich der Höhe der Rahmenschiene (18) ist, an der es befestigt ist.

11. Chassis für ein motorisiertes Fahrzeug nach einem der Ansprüche 1 bis 10, **dadurch gekennzeichnet, dass** jedes Rahmentragwerk (5) aus zwei Trägern (6) besteht, die einen im Wesentlichen quadratischen Querschnitt aufweisen und miteinander durch Streben (7) verbunden sind.

12. Chassis für ein motorisiertes Fahrzeug nach Anspruch 11, **dadurch gekennzeichnet, dass** wenigstens einer der quadratischen Träger eine Bahn (20) auf wenigstens einer seiner Flächen aufweist.

13. Chassis für ein motorisiertes Fahrzeug nach Anspruch 12, **dadurch gekennzeichnet, dass** jede der Flächen der quadratischen Träger auf ihren vier Flächen eine Bahn (20) aufweist, die eine Mutter, einen Bolzenkopf oder einen Niet aufnehmen kann.

14. Chassis für ein motorisiertes Fahrzeug nach Anspruch 12 oder 13, **dadurch gekennzeichnet, dass** wenigstens eine der Bahnen (20) wenigstens eine Vergrößerung aufweist.

15. Chassis für ein motorisiertes Fahrzeug nach einem der Ansprüche 1 bis 14, **dadurch gekennzeichnet, dass** die zwei Rahmentragwerke (5) miteinander durch zwei Querträger (9) verbunden sind, die Motoraufhängungsbefestigungen aufnehmen.

16. Chassis für ein motorisiertes Fahrzeug nach einem der Ansprüche 1 bis 15, **dadurch gekennzeichnet, dass** das Kühlsystem (21) an dem freien Ende der zwei Rahmentragwerke (5) angebracht ist.

17. Chassis für ein motorisiertes Fahrzeug nach einem der Ansprüche 1 bis 16, **dadurch gekennzeichnet, dass** wenigstens eines der Rahmentragwerke (5) ein Abschleppsystem direkt trägt.

18. Chassis für ein motorisiertes Fahrzeug nach einem der Ansprüche 1 bis 17, **dadurch gekennzeichnet, dass** wenigstens eines der Rahmentragwerke (5) das Lenksystem direkt trägt.

19. Chassis nach einem der Ansprüche 1 bis 18, **dadurch gekennzeichnet, dass** wenigstens eines der Rahmentragwerke (5) des vorderen Abschnitts durch eine Verlängerung (10) verlängert ist.

20. Chassis nach Anspruch 19, **dadurch gekennzeichnet, dass** die Verlängerung (10) an dem unteren Träger (6) des Rahmentragwerks (5) angebracht ist und von zwei nach außen geformten Trägern (11, 12) gebildet wird, die durch Ständer (14) verbunden sind.

## Revendications

1. Châssis pour véhicule industriel motorisé du type camion comportant une partie avant (2) et une partie arrière (3) :
- la partie avant (2) étant capable en particulier de recevoir au moins une unité de puissance motrice (19,20), et un système d'essieu, et
- la partie arrière (3) ayant au moins un système d'essieu et étant capable de recevoir une charge ou des moyens d'accouplement,
**caractérisé en ce que** ledit châssis est divisé en des portions avant (2) et arrière (3) séparées attachées l'une à l'autre, dans lesquelles la partie arrière comporte deux rails de châssis parallèles (18), et la partie avant (2) comporte deux treillis (5) qui sont agencés respectivement dans le prolongement de l'un des rails de châssis (18), chaque treillis (5) étant capable d'avoir une portion formée, chaque treillis (5) étant formé d'au moins deux poutres (6) jointes par une pluralité d'entretoises (7).

2. Châssis pour véhicule motorisé selon la revendication 1, **caractérisé en ce que** les deux treillis (5) sont joints par au moins une poutre transversale (9).

3. Châssis pour véhicule motorisé selon la revendication 1 ou selon la revendication 2, **caractérisé en ce qu'**au moins un des châssis (5) est formé dans au moins une zone de manière à conférer au châssis une largeur variable.

4. Châssis pour véhicule motorisé selon la revendication 3, **caractérisé en ce que** chaque treillis (5) comporte une zone (8) formée en double courbure pour accroître la largeur du châssis.

5. Châssis pour véhicule motorisé selon l'une des revendications 2 à 4, **caractérisé en ce qu'**au moins l'une des poutres (6) de l'un des treillis (5) présente une déflexion transversale.

6. Châssis pour véhicule motorisé selon la revendication 5, **caractérisé en ce que** la portion formée d'un treillis (5) est dirigée vers l'intérieur du châssis.

7. Châssis pour véhicule motorisé selon l'une des revendications 1 à 6, **caractérisé en ce que** les treillis (5) sont connectés par plusieurs poutres transversales (9, 16).

8. Châssis pour véhicule motorisé selon l'une des revendications 1 à 7, **caractérisé en ce qu'**au moins deux poutres transversales adjacentes (9) sont connectées l'une à l'autre par au moins une poutre longitudinale en forme de croix (8).

9. châssis pour véhicule motorisé selon l'une des revendications 1 à 8, **caractérisé en ce que** chaque rail de châssis (18) est équipé d'une pluralité de trous et chaque treillis (5) est équipé d'une pluralité de trous correspondants, l'attachement d'un treillis (5) sur un rail de châssis (18) étant réalisé par insertion d'une tige dans chaque trou respectivement d'un rail de châssis (18) et du treillis (5).

10. Châssis pour véhicule motorisé selon l'une des revendications 1 à 9, **caractérisé en ce que** la hauteur d'un treillis (5) est substantiellement égale à la hauteur du rail de châssis (18) auquel il est attaché.

11. Châssis pour véhicule motorisé selon l'une des revendications 1 à 10, **caractérisé en ce que** chaque treillis (5) consiste en deux poutres (6) de section transversale sensiblement carrée qui sont jointes par des entretoises (7).

12. Châssis pour véhicule motorisé selon la revendication 11, **caractérisé en ce qu'**au moins l'une des poutres carrées comporte une glissière (20) sur au moins une de ses faces.

13. Châssis pour véhicule motorisé selon que la revendication 12, **caractérisé en ce que** chaque face de la poutre carrée comporte, sur ses quatre faces, une glissière (20) capable de recevoir un écrou, une tête de vis, ou un rivet.

14. Châssis pour véhicule motorisé selon la revendication 12 ou selon la revendication 13, **caractérisé en ce qu'**au moins une des glissières (20) comporte au moins un élargissement.

15. Châssis pour véhicule motorisé selon l'une des revendications 1 à 14, **caractérisé en ce que** les deux treillis (5) sont connectés par deux poutres transversales (9) recevant des attaches de suspension moteur.

16. Châssis pour véhicule motorisé selon l'une des revendications 1 à 15, **caractérisé en ce que** le système de refroidissement (21) est attaché à l'extrémité libre des deux treillis (5).

17. Châssis pour véhicule motorisé selon l'une des revendications 1 à 16, **caractérisé en ce qu'**au moins un des treillis (5) supporte directement un système de remorquage.

18. Châssis pour véhicule motorisé selon l'une des revendications 1 à 17, **caractérisé en ce qu'**au moins un des treillis (5) supporte directement le système de direction.

19. Châssis selon l'une des revendications 1 à 18, **caractérisé en ce qu'**au moins un des treillis (5) de la portion avant est allongé par une extension (10).

20. Châssis selon la revendication 19, **caractérisé en ce que** l'extension (10) est attachée à la poutre inférieure (6) d'un treillis (5) et est formée de deux poutres (11, 12) mises en forme vers l'extérieur connectées par des montants (14).
